# EUROPEAN PATENT APPLICATION

(11) **EP 4 852 355 A1**
(43) Date of publication of application: **09.12.2026**
(21) Application number: 24930423.9
(22) Date of filing: 21.10.2024
(51) Int. Cl.: H04L 1/00

(54) **METHOD FOR SENDING DATA IN COMMUNICATION NETWORK, AND DEVICE**

(30) Priority: 22.03.2024 CN 202410345651
(71) Applicant: HUAWEI TECHNOLOGIES CO., LTD., Shenzhen, Guangdong 518129 (CN)
(72) Inventor: SUN, Liang, Shenzhen, Guangdong 518129 (CN); SU, Wei, Shenzhen, Guangdong 518129 (CN)
(74) Representative: Huawei European IPR
(86) International application number: PCT/CN2024/126101
(87) International publication number: WO 2025/194765

(57) **Abstract**

This application provides a method for sending data in a communication network and a device, to implement transmission of an OTN frame in a PON system, thereby shortening latency and improving system performance. The method includes: mapping a first data frame to a first transmission frame, where a length of the first transmission frame is related to a rate of the first data frame, and the rate of the first data frame ranges from 10 Mbit/s to 1250 Mbit/s; and sending the first transmission frame.

## Description

### TECHNICAL FIELD

This application relates to the field of optical communication technologies, and in particular, to a method for sending data in a communication network and a device.

### BACKGROUND

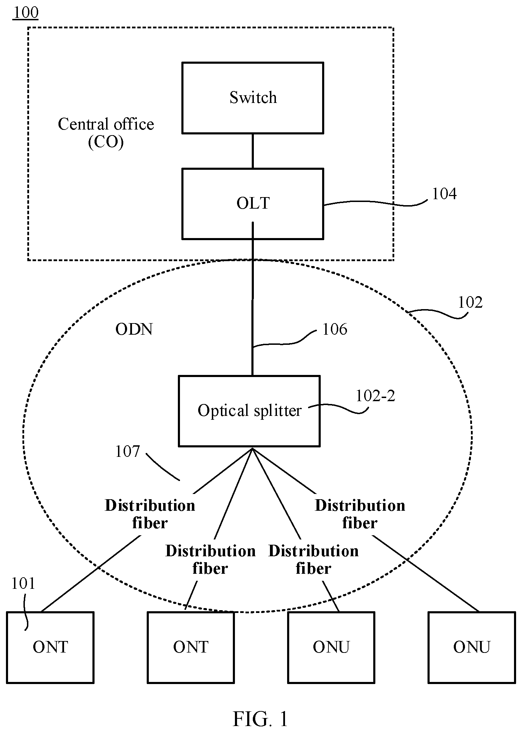

A passive optical network (passive optical network, PON) is an optical access technology using a point-to-multipoint topology structure. FIG. 1 is a diagram of a structure of a PON system. As shown in FIG. 1, the PON system 100 includes an optical line termination (Optical Line Termination, OLT) 104, an optical distribution network (Optical Distribution Network, ODN) 102, and an optical network unit (Optical Network unit, ONU) or optical network terminal (Optical Network Terminal, ONT) 101. The OLT 104 provides a network side interface. The OLT 104 is connected to a network side device (for example, a switch or a router) at an upper layer, and connected to one or more ODNs 102 at a lower layer. Generally, the OLT 104 is typically located in a central office (central office, CO), and the ONU/ONT 101 is located at or near a user's home. The ONU provides a user side interface, and is connected to the ODN 102. If the ONU also provides a user interface function, for example, an Ethernet user interface or a plain old telephone service (plain old telephone service, POTS) user interface, the ONU is referred to as an ONT. The ODN is a passive optical splitting device, and include three parts: a passive optical splitter (Splitter) 102-2, a feeder fiber 106, and a distribution fiber 107. In the PON system, the ODN 102 divides one optical fiber into a plurality of optical fibers, and ONUs/ONTs share a bandwidth. Transmission in a direction from the OLT 104 to the ONU/ONT 101 is referred to as downstream transmission, and transmission in a direction from the ONU/ONT 101 to the OLT 104 is referred to as upstream transmission. For upstream service transmission, access is implemented in a time division multiplexing (time division multiplexing, TDM) manner. The principle of the time division multiplexing is as follows: An upstream transmission time is divided into several slots Ti (i=1, 2, 3, ..., 32, ...), within each slot, only one ONU/ONT 101 is scheduled to send data to the OLT 104 in a packetized manner, and the ONUs/ONTs 101 successively send data in an order specified by the OLT 104. The TDM requires the OLT 104 to perform strict transmission timing for each ONU/ONT 101 after measuring a distance between the OLT 104 and each ONU/ONT 101. Each ONU/ONT 101 obtains timing information from a downstream signal sent by the OLT device 104, and sends upstream packet data within a slot specified by the OLT 104, thereby avoiding collisions among the ONUs/ONTs 101. That is, each ONU/ONT 101 can send its own upstream data only in a slot allocated by the OLT 104. For downstream service transmission, service data is sent to the ONUs/ONTs 101 in a broadcast manner. The ODN 102 transmits downstream data of the OLT 104 to the ONUs/ONTs 101, and aggregates upstream data of the plurality of ONUs/ONTs 101 for transmission to the OLT 104.

As a core technology of a next-generation transport network, an optical transport network (Optical transport network, OTN) includes technical specifications of an electrical layer and an optical layer, and features rich operation, administration, and maintenance (Operation, Administration, and Maintenance, OAM) capabilities, robust tandem connection monitoring (Tandem Connection Monitoring, TCM) capabilities, and out-of-band forward error correction (Forward Error Correction, FEC) capabilities. The OTN enables flexible scheduling and management for large-capacity services, increasing becoming a mainstream technology for backbone transport networks.

Existing fine-grain pipe technologies evolved based on the OTN technology include optical service unit (optical service unit, OSU) technology and fine-grain OTN (fine-grain Optical Transport Network, fgOTN) technology. These two technologies can provide a finer slot granularity and a simpler lossless bandwidth adjustment mechanism, and support efficient carrying of client services at rates ranging from 2 Mbit/s to 10 Gbit/s. Therefore, sinking fine-grain pipe technologies to the PON is of great significance.

### SUMMARY

This application provides a method for sending data in a communication network and a device, to implement transmission of an OTN frame in a PON system, thereby shortening latency and improving system performance.

According to a first aspect, an embodiment of this application provides a method for processing a service signal. The method may be performed by a sending node or a component (for example, a chip or a chip system) in the sending node. This is not limited in this application. The method includes: mapping service data to an optical transport network OTN frame; mapping the OTN frame to a first transmission frame, where the first transmission frame includes m X bytes, and m satisfies: $m = \left⌈R1/R2\right⌉ + 1$, R1 is a rate of the OTN frame, R2 is a rate corresponding to the X bytes, a rate of the first transmission frame is m*R2, and ┌ ┐ represents rounding up; and sending the first transmission frame, where X is an integer greater than 1.

According to the foregoing solution, a structure of the first transmission frame provided in this application may be adjusted based on the rate of the mapped OTN frame. This enhances flexibility of designing the structure of the first transmission frame, and ensures that a corresponding fixed bandwidth is allocated for transmission. When the solution of this application is applied to a PON system, interconnection and interworking or integration between the PON system and an OTN system can be implemented.

With reference to the first aspect, in some implementations of the first aspect, if X is 16, a corresponding rate is 8.192 Mbit/s.

In some embodiments, the first transmission frame may alternatively be represented by using m Y bits, where the Y bits do not necessarily correspond to an integer quantity of bytes.

With reference to the first aspect, in some implementations of the first aspect, the mapping the OTN frame to the first transmission frame includes:
mapping the OTN frame to (m-1) X bytes in a payload area of the first transmission frame, where a mapping granularity of the OTN frame is the X bytes.

With reference to the first aspect, in some implementations of the first aspect, the payload area of the first transmission frame further includes an overhead generated when the OTN frame is mapped to the (m-1) X bytes, and a frame header of the first transmission frame and the overhead jointly occupy one of the X bytes.

With reference to the first aspect, in some implementations of the first aspect, the overhead includes a data amount Cₘ of the OTN frame carried in the first transmission frame.

With reference to the first aspect, in some implementations of the first aspect, the overhead further includes a sequence indicator SQ of the first transmission frame.

With reference to the first aspect, in some implementations of the first aspect, the mapping the OTN frame to the first transmission frame includes: mapping the OTN frame to (m-1) X bytes in a payload area of an intermediate frame, where a mapping granularity of the OTN frame is the X bytes, and an overhead generated when the OTN frame is mapped to the (m-1) X bytes is carried in an overhead area of the intermediate frame; and mapping the intermediate frame to the payload area of the first transmission frame, where a mapping granularity of the intermediate frame is the X bytes, the (m-1) X bytes in the payload area of the first transmission frame are used to carry a payload of the intermediate frame, and a frame header of the first transmission frame and the overhead jointly occupy one of the X bytes.

With reference to the first aspect, in some implementations of the first aspect, the overhead includes a data amount Cₘ of the OTN frame carried in the intermediate frame.

With reference to the first aspect, in some implementations of the first aspect, the overhead further includes a sequence indicator SQ of the intermediate frame.

With reference to the first aspect, in some implementations of the first aspect, the sending the first transmission frame includes: mapping the first transmission frame to a second transmission frame; and cyclically sending the second transmission frame within the sending duration, where a sending cycle of the second transmission frame includes n slots, a quantity of bytes occupied by each of the n slots is X, the first transmission frame is carried in m consecutive slots of the n slots, and n and m are integers greater than 1.

With reference to the first aspect, in some implementations of the first aspect, the sending duration is 125 µs, the sending duration includes eight sending cycles, and each sending cycle is 15.625 µs.

According to the foregoing solution, when the solution of this application is applied to upstream transmission of a PON system or an integrated OTN system, a smaller sending cycle can be provided, so that latency and delay jitter can be reduced.

With reference to the first aspect, in some implementations of the first aspect, the sending the first transmission frame includes: mapping the first transmission frame to a third transmission frame; and sending the third transmission frame, where a payload area of the third transmission frame includes a plurality of sending cycles, each of the plurality of sending cycles includes n slots, a quantity of bytes occupied by each of the n slots is X, the first transmission frame is carried in m consecutive slots of the n slots, and n and m are integers greater than 1.

With reference to the first aspect, in some implementations of the first aspect, a sending duration of the third transmission frame is 125 µs, the payload area of the third transmission frame includes eight sending cycles, and each sending cycle is 15.625 µs.

According to the foregoing solution, when the solution of this application is applied to downstream transmission of a PON system, a more refined sending cycle can be provided, so that latency and transmission jitter can be reduced.

With reference to the first aspect, in some implementations of the first aspect, the OTN frame is a fine-grain flexible optical data unit fgODUflex frame.

According to the foregoing solution, transmission of the OTN frame can be implemented in the PON system. Because the fgODU frame has a hard pipe transmission capability capable of providing fine granularity services, in the solution of this application, the PON system can have an end-to-end TDM hard pipe capability, to implement the transmission of the OTN frame in the PON system.

According to a second aspect, an embodiment of this application provides a method for processing a service signal. The method may be performed by a receiving node or a component (for example, a chip or a chip system) in the receiving node. This is not limited in this application. The method includes: receiving a first transmission frame, where the first transmission frame includes m X bytes, and m satisfies: $m = \left⌈R1/R2\right⌉ + 1$, R1 is a rate of an optical transport network OTN frame, R2 is a rate corresponding to the X bytes, a rate of the first transmission frame is m*R2, and ┌ ┐ represents rounding up; demapping the OTN frame from the first transmission frame; and demapping service data from the OTN frame, where X is an integer greater than 1.

With reference to the second aspect, in some implementations of the second aspect, if X is 16, a corresponding rate is 8.192 Mbit/s.

With reference to the second aspect, in some implementations of the second aspect, the demapping the OTN frame from the first transmission frame includes: demapping the OTN frame from (m-1) X bytes in the payload area of the first transmission frame at a granularity of X bytes.

With reference to the second aspect, in some implementations of the second aspect, the payload area of the first transmission frame further includes an overhead generated when the OTN frame is mapped to the (m-1) X bytes, and a frame header of the first transmission frame and the overhead jointly occupy one of the X bytes.

With reference to the second aspect, in some implementations of the second aspect, the overhead includes a data amount Cₘ of the OTN frame carried in the first transmission frame.

With reference to the second aspect, in some implementations of the second aspect, the overhead further includes a sequence indicator SQ of the first transmission frame.

With reference to the second aspect, in some implementations of the second aspect, the demapping the OTN frame from the first transmission frame includes: demapping an intermediate frame from the first transmission frame at a granularity of X bytes, where (m-1) X bytes in a payload area of the first transmission frame are used to carry a payload of the intermediate frame; and demapping the OTN frame from the (m-1) X bytes in the payload area of the intermediate frame at a granularity of X bytes, where an overhead generated when the OTN frame is mapped to the intermediate frame is carried in an overhead area of the intermediate frame, and a frame header of the first transmission frame and the overhead jointly occupy one of the X bytes.

With reference to the second aspect, in some implementations of the second aspect, the overhead includes a data amount Cₘ of the OTN frame carried in the intermediate frame.

With reference to the second aspect, in some implementations of the second aspect, the overhead further includes a sequence indicator SQ of the intermediate frame.

With reference to the second aspect, in some implementations of the second aspect, the receiving the first transmission frame includes:
cyclically receiving a second transmission frame within a receiving duration, where a reception cycle of the second transmission frame includes n slots, a quantity of bytes occupied by each of the n slots is X, the first transmission frame is carried in m consecutive slots of the n slots, and n and m are integers greater than 1; and demapping the first transmission frame from the second transmission frame.

With reference to the second aspect, in some implementations of the second aspect, the receiving duration is 125 µs, the receiving duration includes eight reception cycles, and each reception cycle is 15.625 µs.

With reference to the second aspect, in some implementations of the second aspect, the receiving the first transmission frame includes: receiving a third transmission frame, where a payload area of the third transmission frame includes a plurality of reception cycles, each of the plurality of reception cycles includes n slots, a quantity of bytes occupied by each of the n slots is X, the first transmission frame is carried in m consecutive slots of the n slots, and n and m are integers greater than 1; and demapping the first transmission frame from the third transmission frame.

With reference to the second aspect, in some implementations of the second aspect, a receiving duration of the third transmission frame is 125 µs, the payload area of the third transmission frame includes eight reception cycles, and each reception cycle is 15.625 µs.

With reference to the second aspect, in some implementations of the second aspect, the OTN frame is a fine-grain flexible optical data unit fgODUflex frame.

According to a third aspect, an embodiment of this application provides an apparatus for processing a service signal. The apparatus is configured to perform the method provided in the first aspect. Specifically, the apparatus for processing a service signal may include units and/or modules configured to perform the method provided in any one of the first aspect or the foregoing implementations of the first aspect, for example, a processing module and a transceiver module.

In an implementation, the apparatus for processing a service signal may include units and/or modules configured to perform the method provided in any one of the first aspect or the foregoing implementations of the first aspect, and is a sending device or a sending node. The transceiver module may be a transceiver or an input/output interface. The processing module may be at least one processor. Optionally, the transceiver may be a transceiver circuit. Optionally, the input/output interface may be an input/output circuit.

In another implementation, the apparatus for processing a service signal is a sending device or a chip, a chip system, or a circuit in the sending node. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a fourth aspect, an embodiment of this application provides an apparatus for processing a service signal. The apparatus is configured to perform the method provided in the second aspect. Specifically, the apparatus for processing a service signal may include units and/or modules configured to perform the method provided in the second aspect, for example, a processing module and a transceiver module.

In an implementation, the apparatus for processing a service signal is a receiving device or a receiving node. The transceiver module may be a transceiver or an input/output interface. The processing module may be at least one processor. Optionally, the transceiver may be a transceiver circuit. Optionally, the input/output interface may be an input/output circuit.

In another implementation, the apparatus for processing a service signal is a receiving device or a chip, a chip system, or a circuit in the receiving node. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a fifth aspect, an embodiment of this application provides a processor, configured to perform the methods provided in the foregoing aspects.

Operations such as sending and obtaining/receiving related to the processor may be understood as operations such as outputting, receiving, and inputting of the processor or sending and receiving operations performed by a radio frequency circuit and an antenna, unless otherwise specified, or provided that the operations do not contradict actual functions or internal logic of the operations in related descriptions. This is not limited in this application.

According to a sixth aspect, an embodiment of this application provides a computer-readable storage medium. The computer-readable storage medium stores program code to be executed by a device, and the program code is used to perform the method provided in any one of the implementations of the first aspect or the second aspect.

According to a seventh aspect, an embodiment of this application provides a computer program product including instructions. When the computer program product runs on a computer, the computer is caused to perform the method provided in any one of the implementations of the first aspect or the second aspect.

According to an eighth aspect, an embodiment of this application provides a chip. The chip includes a processor and a communication interface. The processor reads, through the communication interface, instructions stored in a memory, to perform the method provided in any one of the implementations of the first aspect or the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect or the second aspect.

According to a ninth aspect, an embodiment of this application provides a network device. The network device includes: a processor and an input/output interface, configured to perform the method provided in any one of the implementations of the first aspect or the second aspect. The input/output interface is configured to: receive and send an OTN frame and a first transmission frame; and the processor is configured to process the OTN frame and the first transmission frame.

According to a tenth aspect, an embodiment of this application provides an optical module. The optical module includes a signal processor and an optical transmitter component. The signal processor performs the method provided in any one of the implementations of the first aspect; and the optical transmitter component is configured to: convert a first transmission frame into an optical signal, and send the optical signal.

According to an eleventh aspect, an embodiment of this application provides an optical module. The optical module includes a signal processor and an optical transmitter component. The optical transmitter component is configured to: receive an optical signal, and convert the optical signal into a first transmission frame; and the signal processor is configured to perform the method provided in any one of the implementations of the second aspect.

According to a twelfth aspect, an embodiment of this application provides a communication system, including at least one apparatus for processing a service signal according to the third aspect and the fourth aspect.

According to a thirteenth aspect, an embodiment of this application provides a method for sending data in a communication network. The method includes: mapping a first data frame to a first transmission frame, where a length of the first transmission frame is related to a rate of the first data frame, and the rate of the first data frame ranges from 10 Mbit/s to 1250 Mbit/s; and sending the first transmission frame.

In a possible implementation, the length of the first transmission frame is further related to a transmission cycle of the communication network.

In a possible implementation, the transmission cycle of the communication network is 15.625 µs. The communication network may be a PON network, for example, a GPON, a 10G PON, a 50G PON, or a 200G PON.

In a possible implementation, the first data frame has p rate levels, and when the rate level is greater than 1, a higher rate of the first data frame indicates a longer length of the first transmission frame.

In a possible implementation, the length of the first transmission frame includes q 16-byte, and $q = ceiling \left(\frac{{R}_{fgODU \left(p\right)}}{8.192}\right) + 1$, or $q = ceiling \left(\frac{{R}_{fgODU \left(p\right)} \pm 20 ppm}{8.192}\right) + 1$, where ceiling represents rounding up, and *R*_{*fgODU*(*p*)} represents the rate of the first data frame.

In a possible implementation, the mapping the first data frame to the first transmission frame includes: mapping the first data frame to an intermediate frame, where a length of the intermediate frame is related to the rate of the first data frame; and mapping the intermediate frame to the first transmission frame.

In a possible implementation, the first data frame is a fine-grain flexible optical data unit fgODUflex frame, and the first transmission frame is a passive optical network PON frame. For example, the PON frame is a GEM frame, and may be a GEM frame used in a network such as a GPON, a 10G PON, or a 50G PON.

For specific beneficial effects achieved by the second aspect to the thirteenth aspect, refer to the descriptions of the beneficial effects in the first aspect. Details are not described herein again.

### BRIEF DESCRIPTION OF DRAWINGS

FIG. 1 is a diagram of a structure of a PON system;
FIG. 2 is a diagram of an architecture of a PON system according to an embodiment of this application;
FIG. 3 is a diagram of a possible hardware structure of a network device 300 applicable to an embodiment of this application;
FIG. 4 is a schematic flowchart of a method for processing a service signal according to an embodiment of this application;
FIG. 5 is a diagram of an implementation of mapping an OTN frame to a first transmission frame according to an embodiment of this application;
FIG. 6(a) to FIG. 6(d) are diagrams of structures of four different types of JCOHs applicable to an embodiment of this application;
FIG. 7 is a diagram of a method for processing a service signal in an upstream direction in a PON system according to an embodiment of this application;
FIG. 8 is a schematic flowchart of another method for processing a service signal according to an embodiment of this application;
FIG. 9 is a diagram of a method for processing a service signal in a downstream direction in a PON system according to an embodiment of this application;
FIG. 10 is a block diagram of an apparatus 1000 for processing a service signal according to an embodiment of this application;
FIG. 11 is a diagram of a possible structure of a device for processing a service signal according to an embodiment of this application;
FIG. 12 is a diagram of a chip system 1200 according to an embodiment of this application; and
FIG. 13 is a diagram of a structure of a system 13 according to this application.

### DESCRIPTION OF EMBODIMENTS

The following describes technical solutions of this application with reference to the accompanying drawings.

For ease of understanding embodiments of this application, the following descriptions are provided.

First, the terms such as "first", "second", and various numeric numbers in the following text descriptions or accompanying drawings in embodiments of this application are merely used for differentiation for ease of description, but are not used to limit the scope of embodiments of this application. For example, different transmission frames are distinguished from each other.

Second, the terms "include", "have" and any other variants in embodiments of this application shown below are intended to cover the non-exclusive inclusion. For example, a system, product, or device that includes a series of units is not necessarily limited to those units expressly listed, but may include other units not expressly listed or inherent to such a product or device.

Third, in embodiments of this application, the term such as "example" or "for example" represents an example, an illustration, or a description. Any embodiment or design solution described as "example" or "for example" should not be explained as being more preferred or having more advantages than another embodiment or design solution. The word like "example" or "for example" is used to present a related concept in a specific manner for ease of understanding.

Fourth, unless otherwise limited, all terms (including technical and scientific terms) used in this application have same meanings as understood usually by a person of ordinary skill in the art to which this application belongs.

Fifth, embodiments of this application are described by using an example in which a fine-grain flexible optical data unit (fine-grain flexible optical data unit, fgODUflex) is mapped to a 10-gigabit passive optical network (XGSPON) encapsulation mode (XGSPON encapsulation mode, XGEM). However, the solutions of this application are not limited thereto. The fgODUflex frame may also be referred to as an fgODU or an fgODU frame. A method for processing a service signal provided in this application can be further applied to PON systems such as a 25G-PON system, a 50G-PON system, and a beyond-50G-PON system. Application of the method for processing a service signal provided in this application may be extended to a frame structure of another fine-grain protocol, for example, OSU (which may also be referred to as an OSU frame, an OSU data frame, a flexible optical service unit (flexible optical service unit, OSUflex), or the like), to implement an OSU-over-PON system.

Sixth, in this application, "sending" and "receiving" indicate signal transmission directions. For example, "receiving information from YY" may be understood as that a source end of the information is YY, and may include direct receiving from YY through a communication interface, or may include indirect receiving from YY via another unit or module through a communication interface. "Sending" may also be understood as "outputting" of a chip interface, and "receiving" may also be understood as "inputting" of the chip interface. In other words, sending and receiving may be performed between devices, for example, between an OLT device and an ONU device, or may be performed in a device. For example, sending or receiving is performed between components, assemblies, chips, software modules, or hardware modules in a device through a bus, a wire, or an interface.

Seventh, in the solutions provided in this application document, the optical network unit and the optical network terminal may be interchanged.

Eighth, the technical solutions of this application are applied to a PON system, and in particular, may be applied to a gigabit passive optical network (Gigabit Passive Optical Network, GPON), an Ethernet passive optical network (Ethernet Passive Optical Network, EPON), an XG(S)-PON (10G (symmetric) Passive Optical Network), a 10G EPON (10G Ethernet Passive Optical Network), a 25G EPON, a 40G EPON, a 50G EPON, and a 100G EPON that are representative. The XG(S)-PON, the 10G EPON, the 25G EPON, the 40G EPON, the 50G EPON, and the 100G EPON may be collectively referred to as a 10G PON or an XGPON. It should be noted that the solutions provided in this application are not limited to the PON system. To be specific, the solutions in this application may be applied to a point-to-multipoint optical network. In example descriptions of this specification, the PON network is merely used as an example for description.

Ninth, in the solutions provided in this application document, a sending node may be referred to as a transmitting node, a sending device, a transmitter device, or the like. Similarly, a receiving node may be referred to as a receiver node, a receiving device, a receiver device, or the like. In addition, in upstream transmission, the sending node may also be referred to as a terminal node, and represents a branch end node in a point-to-multipoint network; and the receiving node may also be referred to as a central office node, and represents a convergence end node in the point-to-multipoint network. On the contrary, in downstream transmission, the sending node may also be referred to as a central office node, and represents a convergence end node in a point-to-multipoint network; and the receiving node may also be referred to as a terminal node, and represents a branch end node in the point-to-multipoint network.

Currently, fgODUflex has been defined in standards, and can support end-to-end transmission of fine-grain services. However, in a point-to-multipoint (Point to Multipoint, P2MP) scenario, fgODUflex electrical scheduling needs to be performed at a distribution node, and the fgODUflex needs to be sent via optical modules in different directions, resulting in excessively high costs. This application provides a method for processing a service signal and a device, to combine fgODUflex and a PON system. In the PON system, based on a P2MP tree-shaped network structure of an ODN, application of the fgODUflex in a P2MP scenario is implemented through an existing optical distribution network in the PON. In the solutions of this application, electrical distribution can be changed to optical distribution, to save a large quantity of optical fibers and optical modules, thereby reducing costs.

The following describes the technical solutions of this application in detail with reference to the accompanying drawings.

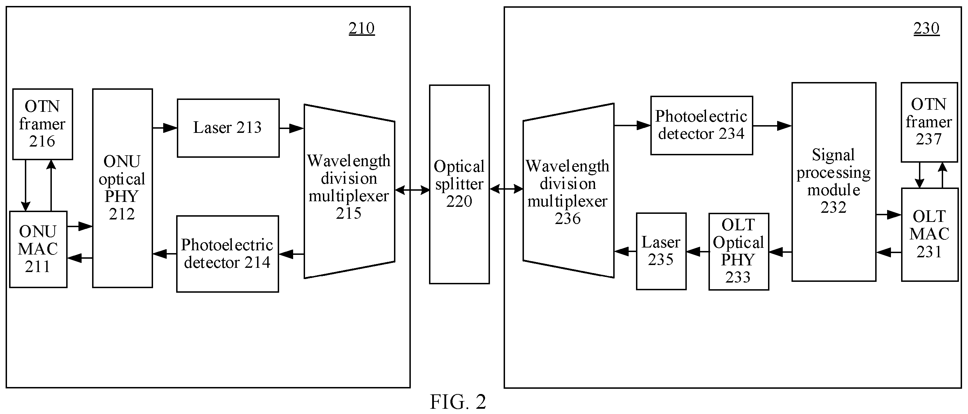

FIG. 2 is a diagram of an architecture of a PON system according to an embodiment of this application. As shown in FIG. 2, a plurality of ONUs 210 (only one ONU is shown in the figure) communicate with an OLT 230 via an optical splitter 220. The ONU 210 may include an OTN framer (framer) 216, an ONU media access control (media access control, MAC) 211, an ONU optical physical layer (physical layer, PHY) 212, a laser 213, and a photoelectric detector 214. In a sending direction, the OTN framer 216 maps (or encapsulates) an OTN signal to a PON signal (for example, GEM or GTC). For example, in this application, the OTN framer 216 maps an OTN frame to a first transmission frame. The first transmission frame is a PON frame, namely, a PON signal. In some scenarios of this application, the OTN framer 216 may also map the first transmission frame to a second transmission frame, where the second transmission frame is a PON frame. Alternatively, in some scenarios of this application, the ONU MAC 211 maps the first transmission frame to a second transmission frame. The ONU MAC 211 may send service data to the ONU optical PHY 212. The ONU optical PHY 212 is also referred to as a driver of the laser 213, and is configured to drive, based on instructions of the ONU MAC 211, the laser to generate an optical signal. The laser 213 modulates the service data into the optical signal under control of the ONU optical PHY 212, and sends, to the OLT 230 through an optical fiber, an upstream optical signal that carries the service data. In a receiving direction, the photoelectric detector 214 receives a downstream optical signal from the OLT 230, and converts the downstream optical signal into an electrical signal. The ONU optical PHY 212 transparently transmits the electrical signal, and the ONU MAC 211 parses the electrical signal to obtain a PON signal. The OTN framer 216 demaps an OTN signal from the PON signal. For example, in this application, the OTN framer 216 demaps the OTN frame from the first transmission frame. In addition, in some scenarios of this application, the OTN framer 216 may also demap the first transmission frame from the second transmission frame. Alternatively, in some scenarios of this application, the ONU MAC 211 demaps the first transmission frame from the second transmission frame. The ONU 210 may further include a wavelength division multiplexer 215, configured to: send, to the optical fiber, the upstream optical signal generated by the laser 213, and send, to the photoelectric detector 214, the downstream optical signal received from the optical fiber.

The OLT 230 may include an OTN framer 237, an OLT MAC 231, a signal processing module 232, an OLT optical PHY 233, a photoelectric detector 234, and a laser 235. In a receiving direction, the photoelectric detector 234 receives an upstream optical signal from the ONU 210, and converts the upstream optical signal into an electrical signal. The electrical signal may be an analog electrical signal or a digital electrical signal. The signal processing module 232 may be implemented by using an analog device (for example, an amplifier) or a digital device (for example, a digital signal processor). Therefore, the signal processing module 232 may perform analog-related processing or digital electrical signal processing. The OLT MAC 231 parses an electrical signal that has passed through the signal processing module 232, to obtain a PON signal. The OTN framer 237 demaps an OTN signal from the PON signal. For example, in this application, the OTN framer 237 demaps the OTN frame from the first transmission frame. In addition, in some scenarios of this application, the OTN framer 237 may also demap the first transmission frame from the second transmission frame. Alternatively, in some scenarios of this application, the OLT MAC 231 demaps the first transmission frame from the second transmission frame. In a sending direction, the OTN framer 237 maps (or encapsulates) an OTN signal to a PON signal (for example, GEM or GTC). For example, in this application, the OTN framer 237 maps the OTN frame to the first transmission frame. In some scenarios of this application, the OTN framer 237 may also map the first transmission frame to the second transmission frame. Alternatively, in some scenarios of this application, the OLT MAC 231 maps the first transmission frame to the second transmission frame. The OLT MAC 231 generates service data, and the signal processing module 232 performs analog-related or digital-related processing on the service data. The laser 235 modulates the service data into an optical signal under control of the OLT optical PHY 233, and sends, to the ONU 210 through an optical fiber, a downstream optical signal that carries the service data. The OLT 230 may further include a wavelength division multiplexer 236, configured to: send, to the optical fiber, the downstream optical signal generated by the laser 235, and send, to the photoelectric detector 234, the upstream optical signal received from the optical fiber.

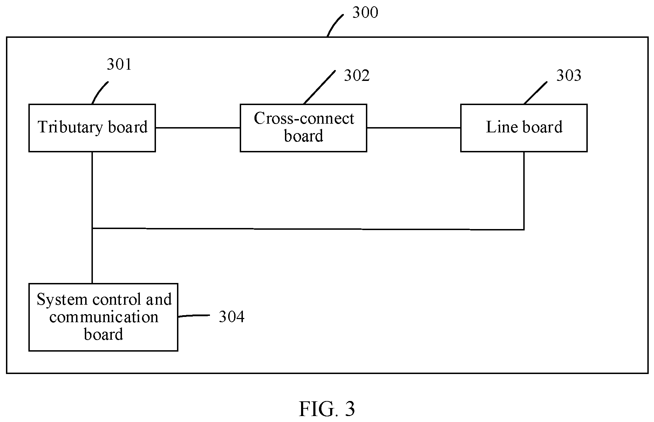

FIG. 3 is a diagram of a possible hardware structure of a network device 300 applicable to an embodiment of this application. The network device 300 is specifically an OTN device. The network device shown in FIG. 3 may communicate with an OLT device in a PON system. The OLT device may send a packet from an ONU device to the network device 300 to send the packet to a peer ONU via another peer network device. The OLT device may further receive a packet sent by the network device 300, and send the received packet to the ONU device through an ODN network. An OTN may be used as a bearer network of a PON, to improve a transmission distance of a PON service or provide better service protection. Specifically, the network device 300 includes a tributary board 301, a cross-connect board 302, a line board 303, an optical layer processing board (not shown in the figure), and a system control and communication board 304. Based on specific requirements, the network device 300 may have different types and quantities of boards. For example, a network device serving as a core node has no tributary board 301. For another example, a network device serving as an edge node includes a plurality of tributary boards 301, or includes no optical cross-connect board 302. For still another example, the network device 300 supporting only an electrical layer function may include no optical layer processing board.

The tributary board 301, the cross-connect board 302, and the line board 303 are configured to process an OTN electrical-layer signal. The tributary board 301 is configured to: receive and send various client services, for example, a synchronous digital hierarchy (Synchronous Digital Hierarchy, SDH) service, a packet service, an Ethernet service, and a fronthaul service. Further, the tributary board 301 may include a client-side optical transceiver module and a signal processor. The client-side optical transceiver module may also be referred to as an optical transceiver, and is configured to: receive and/or send service data. The signal processor is configured to implement mapping and demapping between the service data and a data frame. The cross-connect board 302 is configured to exchange data frames, to complete exchange of one or more types of data frames. The line board 303 mainly processes a line-side data frame. Specifically, the line board 303 may include a line-side optical module and a signal processor. The line-side optical module may be referred to as an optical transceiver, and is configured to: receive and/or send a data frame. The signal processor is configured to: multiplex and demultiplex or map and demap the line-side data frame. The system control and communication board 304 is configured to implement system control. Specifically, the system control and communication board may collect information from different boards, or send a control instruction to a corresponding board. It should be noted that, unless otherwise specified, there may be one or more specific components (for example, signal processors). This is not limited in this application. It should be further noted that a type of a board included in the device, a function design of the board, and a quantity of boards are not limited in this application. It should be noted that, during specific implementation, the foregoing two boards may alternatively be designed as one board. In addition, the network device may further include a standby power supply, a heat dissipation fan, and the like.

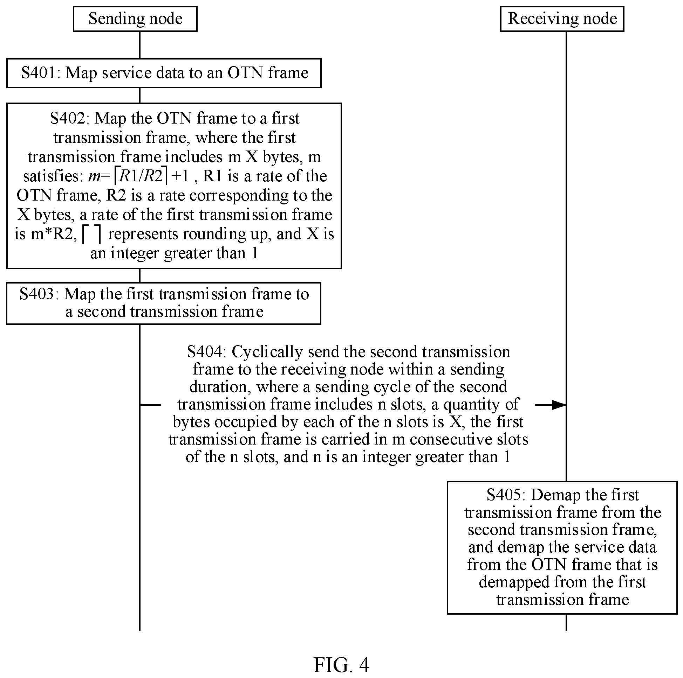

FIG. 4 is a schematic flowchart of a method for processing a service signal according to an embodiment of this application. A sending node may be a terminal node, or an internal component (for example, a chip or a chip system) in the terminal node, and represents a branch end node in a P2MP system, for example, an ONU device in a PON system, or an internal component in the ONU device. A receiving node may be a central office node, or an internal component (for example, a chip or a chip system) in the central office node, and represents a convergence end node in the P2MP system, for example, an OLT device in the PON system. The sending node may be referred to as a transmitting node, a transmitter device, a sending device, or the like. Similarly, the receiving node may be referred to as a receiving node, a receiver device, a receiving device, or the like. This is not limited in this application.

It should be noted that the method shown in FIG. 4 may be understood as data transmission in an upstream direction, which, for example, means that the ONU device sends service data to the OLT device when the sending node is the ONU device, and the receiving node is the OLT device.

Specifically, the method includes the following plurality of steps.

S401: The sending node maps the service data to an OTN frame.

S402: The sending node maps the OTN frame to a first transmission frame, where the first transmission frame includes m X bytes, m satisfies: $m = \left⌈R1/R2\right⌉ + 1$, R1 is a rate of the OTN frame, R2 is a rate corresponding to the X bytes, a rate of the first transmission frame is m*R2, ┌ ┐ represents rounding up, and X is an integer greater than 1.

In the solutions of this application, a service corresponding to the service data mapped by the sending node to the OTN frame may be a service of an enterprise, for example, a bank or a broadband operator, and has a high quality requirement (for example, a hard pipe, hard isolation, or a fixed low delay) on service transmission. The service data may also be referred to as a service signal, client data, client service data, or the like, for example, may be an Ethernet service signal, an E1 service signal, or a synchronous digital hierarchy (Synchronous Digital Hierarchy, SDH) service signal.

Optionally, in the solutions of this application, the OTN frame may be fgODUflex, an OSU, or the like.

It should be noted that the fgODUflex may also be referred to as an fgODUflex frame, an fgODUflex data frame, an fgODUflex signal, or the like. Similarly, the OSU may also be referred to as an OSU frame, an OSU data frame, an OSU signal, or the like. It should be noted that, in descriptions of a data structure that carries service data, the fgODUflex or the OSU is usually understood as a "frame". In this case, the fgODUflex or the OSU may be respectively referred to as an fgODUflex frame or an OSU frame. In descriptions of a carrier that carries service data or used to describe transmission of the service data, the fgODUflex or the OSU is usually understood as a "signal". In this case, the fgODUflex or the OSU may be respectively referred to as an fgODUflex signal or an OSU signal. In the following descriptions, the "frame" and the "signal" are not specially distinguished from each other in this application.

In the solutions of this application, a transmission frame (including the first transmission frame and a second transmission frame) is a data frame at a transport layer. It should be understood that the OTN frame is used to carry the service data. After the service data is mapped to the OTN frame, the OTN frame further needs to be mapped to the transport layer. For example, in an fgODUflex-over-PON system, an OTN frame used to carry service data is fgODUflex. After mapping of the service data to the fgODUflex is completed, the fgODUflex is mapped to a GEM frame. It should be noted that, when the solutions of this application are applied to the PON system, the first transmission frame is not limited to a GEM frame, for example, an XGEM frame (sometimes also represented as [X]GEM or (x)GEM, and those names are not specially distinguished from each other in this application), or a transmission frame that has a same or similar function as a GEM frame in a future PON system.

In the solutions of this application, a structure of the first transmission frame is designed to include the m X bytes. Specifically, if the rate of the OTN frame is set to R1, and the rate corresponding to the X bytes is R2, the rate of the first transmission frame is m*R2, $m = \left⌈R1/R2\right⌉ + 1$, ┌ ┐ represents rounding up, X is the integer greater than 1, and m is an integer greater than 1. R2 may be understood as a transmission rate during transmission of the X bytes, that is, R2 may be understood as a transmission rate of the X bytes. A value of R2 is related to X, L, and M, and R2=(8*X) bit/(L/M) µs. L is a sending duration of the second transmission frame (which may be described below, and details are not described herein) in upstream transmission or downstream transmission, and M is a quantity of sending cycles in the upstream transmission or the downstream transmission, and is a ratio of the sending duration to a length of the sending cycle. It should be noted that the sending duration in the upstream transmission or the downstream transmission is not limited in this application. For example, when the solutions of this application are applied to the PON system, L may be 125 µs (in this application, µs represents microseconds, which is not described again in other parts). In addition, the length of the sending cycle may also be selected based on different application requirements or scenarios, for example, 15.625 µs. For example, in upstream, if X is equal to 16, and the sending duration in the upstream is 125 µs, when the length of the sending cycle is selected as 15.625 µs, there are eight sending cycles included in the sending duration in the upstream. In this case, R2=(8*16) bit/(125/8) µs =8.192 Mbit/s.

It should be further noted that, in this solution, the structure of the first transmission frame and a payload area of an intermediate frame below are both described by using bytes as an example. In some embodiments, alternatively, the structure of the first transmission frame or a payload area of an intermediate frame may be described in a unit of bits. For example, the structure of the first transmission frame includes m*Y bits. It should be noted that, when the structure of the first transmission frame or a structure of the payload area of the intermediate frame is described in the unit of bits, whether Y bits correspond to an integer quantity of bytes is not limited in this application. In other words, the Y bits may be an integer quantity of bytes, or may be a non-integer quantity of bytes. It may be understood that, when the Y bits correspond to the integer quantity of bytes, the structure of the first transmission frame or the structure of the payload area of the intermediate frame may be represented by using bytes, or may be represented by using bits. For example, that the first transmission frame includes the m*X bytes may also be expressed as that the first transmission frame includes m*8*X bits, where Y=8*X. Similarly, the payload area of the intermediate frame includes (m-1)*X bytes. When the Y bits correspond to the non-integer quantity of bytes, the structure of the first transmission frame or the structure of the payload area of the intermediate frame is usually represented by using bits. In this case, Y is not equal to 8*X. It should be noted that a value of X is not limited in this application, for example, may be 8, 16, or 32. When the value of X is 16, a rate R2 corresponding to 16 bytes (byte, B) may be, for example, 8.192 Mbit/s. It can be learned from the foregoing relationship satisfied by m that m is related to the rate (sometimes also referred to as a bit rate, or may also be understood as a bandwidth) of the OTN frame mapped to the first transmission frame. For the first transmission frame, m may be understood as follows: When the first transmission frame is divided at a granularity of X bytes, a length (or understood as a size) of the first transmission frame is m. That is, for the first transmission frame, both the rate and the size of the first transmission frame are related to the rate of the OTN frame (when X is a fixed value). It may be understood that, if the value of the X bytes is fixed, for OTN frames at different rates, lengths of mapped first transmission frames (that is, sizes of m) are different. That is, in the solutions of this application, for OTN frames at specific rates, lengths of first transmission frames into which the OTN frames are mapped are fixed, and are not related to whether services carried in the OTN frames at the specific rates are the same. For the OTN frames at different rates, the lengths of the first transmission frames into which the OTN frames are mapped are different. In other words, in the solutions of this application, the size of the first transmission frame is changeable. For example, when X is 16, the OTN frame is an fgODUflex frame, and the first transmission frame is an [X]GEM frame, Table 1 shows quantities (that is, values of m) of 16 bytes included in [X]GEM frames corresponding to fgODUflex frames at different rates, and correspondences between the fgODUflex frames at different rates and the [X]GEM frames at different rates. The fgODUflex frame may also be represented as fgODUflex(p), and rates of the fgODUflex frames may be classified into p rate levels. For example, p is 119. When p=1, fgODUflex(1) has a minimum rate, which is 10.4092031 Mbit/s. The rate may also be considered as a base rate of the fgODUflex frames. When p=n, a rate of fgODUflex(n) is n ×10.4092031 Mbit/s.

**Table 1**

| | fgODUflex rate (Mbit/s) | Quantity of 16 bytes in [X]GEM, that is, value of m | [X]GEM length (bytes) | [X]GEM rate (Mbit/s) |
|---|---|---|---|---|
| fgODUflex(1) | 10.409203 | 3 | 3×16=48 | 24.576 |
| fgODUflex(2) | 20.818406 | 4 | 4×16=64 | 32.768 |
| fgODUflex(3) | 31.227609 | 5 | 5×16=80 | 40.96 |
| fgODUflex(5) | 52.046015 | 8 | 8×16=128 | 65.536 |
| fgODUflex(10) | 104.09203 | 14 | 14×16=224 | 114.688 |
| fgODUflex(20) | 208.18406 | 27 | 27×16=432 | 221.184 |
| fgODUflex(30) | 312.27609 | 40 | 40×16=640 | 327.68 |
| fgODUflex(40) | 416.36812 | 52 | 52×16=832 | 425.984 |
| fgODUflex(50) | 520.46015 | 65 | 65×16=1040 | 532.48 |
| fgODUflex(100) | 1040.9203 | 129 | 129×16=2064 | 1056.768 |
| fgODUflex(119) | 1238.69517 | 153 | 153×16=2448 | 1253.376 |

Specially, considering that a minimum length of a MAC frame is 64 bytes, when p=1, the length of the [X]GEM corresponding to the fgODUflex(1) may be designed to be 64 bytes, that is, 16 bytes are added for redundancy on the basis of 48 bytes.

It should be noted that, in the solutions of this application, the OTN frame may be mapped to the first transmission frame in two implementations. Specifically, in an implementation, the OTN frame is directly mapped to the first transmission frame. Alternatively, in another implementation, the OTN frame is first mapped to the intermediate frame, and the intermediate frame is then mapped to the first transmission frame. The following separately describes the two implementations.

Implementation 1: The OTN frame is directly mapped to the first transmission frame.

Specifically, when the OTN frame is mapped to the first transmission frame, the OTN frame is mapped to (m-1) X bytes in the first transmission frame at a mapping granularity of the X bytes, where the (m-1) X bytes are a part of a payload area of the first transmission frame, and an overhead generated in a process of mapping the OTN frame to the (m-1) X bytes is further carried in the payload area of the first transmission frame. That is, for the first transmission frame, content carried in the payload area of the first transmission frame is all bytes of the OTN frame (that is, the entire OTN frame) and the overhead generated in the process of mapping the OTN frame to the first transmission frame.

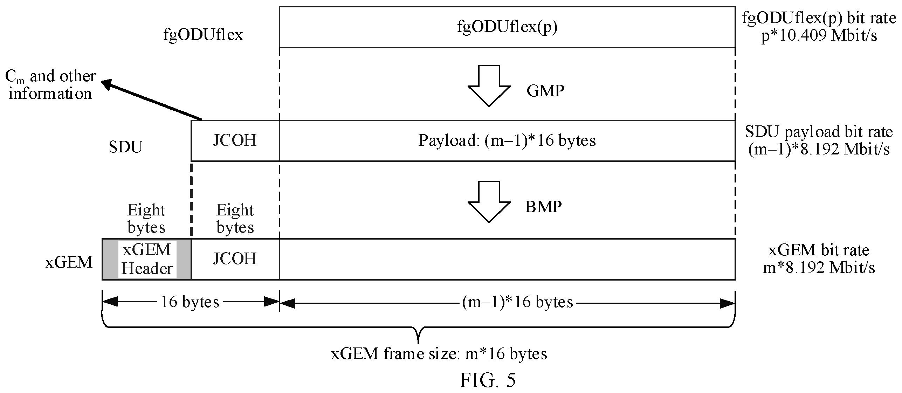

For example, the implementation in which the OTN frame is directly mapped to the first transmission frame is described with reference to FIG. 5. In FIG. 5, fgODUflex (which may also be referred to as an fgODUflex signal) whose rate is p*10.409 Mbit/s is mapped to an xGEM frame at a mapping granularity of 16 bytes. Specifically, when the fgODUflex signal is mapped to the xGEM frame, the fgODUflex signal is mapped to a payload area of the xGEM frame, a structure of the xGEM frame is m*16 bytes, and a rate corresponding to each 16 bytes is 8.192 Mbit/s. An overhead area of the xGEM frame is eight bytes, and the payload area of the xGEM frame is m*16 bytes-8 bytes. In the payload area of the xGEM frame, (m-1) 16 bytes carry the fgODUflex signal, and remaining eight bytes are used to carry a justification control (justification control, JC) overhead (overhead, OH) generated in a mapping process. That is, in the structure of the xGEM frame shown in FIG. 5, the eight bytes in the overhead area of the xGEM frame and the eight bytes reserved in the payload area of the xGEM frame jointly occupy exactly 16 bytes, and a total quantity of 16 bytes included in the xGEM frame is m, where m satisfies $m = \left⌈p*10.409Mbit/s/8.192Mbit/s\right⌉ + 1$, and a value of p may be from 1 to 119. Alternatively, m satisfies: $m = ceiling \left(\frac{{R}_{fgODU \left(p\right)}}{8.192}\right) + 1$. Alternatively, m satisfies: $m = ceiling \left(\frac{{R}_{fgODU \left(p\right)} \pm 20 ppm}{8.192}\right) + 1$. For example, when p is equal to 1, m is equal to 3; or when p is equal to 5, m is equal to 8. That is, a size and a rate of the xGEM frame are related to a rate of the fgODUflex signal. In FIG. 5, a mapping manner is generic mapping procedure (generic mapping procedure, GMP) mapping. It may be understood that, in the mapping process shown in FIG. 5, the fgODUflex signal is mapped to the payload area of the xGEM frame through a GMP, and rate adaptation is completed through the GMP, where the fgODUflex signal at p*10.409 Mbit/s is adapted to the payload area of xGEM at (m-1)*8.192 Mbit/s, and mapping information is carried in the reserved JCOH in the payload area. A header field of the xGEM frame (that is, the overhead of the xGEM frame) is consistent with an existing header field of xGEM. Details are not described herein in this embodiment of this application.

For example, when X is 16, the OTN frame is an fgODUflex frame, and the first transmission frame is an xGEM frame, Table 2 shows quantities (that is, values of m-1), of 16 bytes included in a payload that is required to carry fgODUflex and that is in one xGEM frame, corresponding to fgODUflex frames at different rates, and correspondences between the fgODUflex frames at different rates and xGEM frame payload rates.

**Table 2**

| | fgODUflex rate (Mbit/s) | Quantity of 16 bytes, occupied for carrying fgODUflex, in a payload area of each xGEM frame | xGEM frame payload rate (Mbit/s) |
|---|---|---|---|
| fgODUflex(1) | 10.409203 | 2 | 16.384 |
| fgODUflex(2) | 20.818406 | 3 | 24.576 |
| fgODUflex(3) | 31.227609 | 4 | 32.768 |
| fgODUflex(5) | 52.046015 | 7 | 57.344 |
| fgODUflex(10) | 104.09203 | 13 | 106.496 |
| fgODUflex(20) | 208.18406 | 26 | 212.992 |
| fgODUflex(30) | 312.27609 | 39 | 319.488 |
| fgODUflex(40) | 416.36812 | 51 | 417.792 |
| fgODUflex(50) | 520.46015 | 64 | 524.288 |
| fgODUflex(100) | 1040.9203 | 128 | 1048.576 |
| fgODUflex(119) | 1238.69517 | 152 | 1245.184 |

Implementation 2: The OTN frame is first mapped to the intermediate frame, and the intermediate frame is then mapped to the first transmission frame.

Specifically, when the OTN frame is mapped to the intermediate frame, the OTN frame is mapped to (m-1) X bytes in the intermediate frame at a mapping granularity of the X bytes, where the (m-1) X bytes form a payload area of the intermediate frame, and an overhead generated in a process of mapping the OTN frame to the payload area (the (m-1) X bytes) of the intermediate frame is carried in an overhead area of the intermediate frame. That is, for the intermediate frame, content carried in the payload area of the intermediate frame is all bytes of the OTN frame (that is, the entire OTN frame), and content carried in the overhead area of the intermediate frame is the overhead generated in the process of mapping the OTN frame. After the mapping of the OTN frame is completed and the intermediate frame is generated, the intermediate frame is entirely mapped to a payload area of the first transmission frame. It may be understood that a size of the intermediate frame is equal to a size of the payload area of the first transmission frame, and because m is obtained through calculation based on the rate of the OTN frame, the (m-1) X bytes included in the payload area of the intermediate frame are related to the rate of the OTN frame. That is, for the intermediate frame, both a rate and the size of the intermediate frame are related to the rate of the OTN frame (when X is a fixed value), where the rate of the intermediate frame is (m-1)*R2, and R2 is a rate corresponding to the X bytes. That is, in the solutions of this application, for the fixed X bytes, when the rate of the OTN frame changes, the size of the intermediate frame also changes accordingly. For an OTN frame at a specific rate, a size of an intermediate frame corresponding to the OTN frame is fixed.

It can be learned from the foregoing descriptions that the payload area of the intermediate frame carries all valid data of the OTN frame, the overhead generated when the OTN frame is mapped to the intermediate frame is carried in the overhead area of the intermediate frame, and all bytes of the intermediate frame (that is, the entire intermediate frame) are carried in the payload area of the first transmission frame. That is, when the OTN frame is first mapped to the intermediate frame, the intermediate frame is a frame that directly carries the valid data of the OTN frame, that is, the payload area of the intermediate frame is completely occupied by the valid data of the OTN frame. It may be understood that, in this application, a name of the intermediate frame is merely an example, and another name, for example, a service data unit (Service Data Unit, SDU) frame, may be used. This is not limited in this application.

For example, the implementation in which the OTN frame is directly mapped to the intermediate frame, and the intermediate frame is then mapped to the first transmission frame is described with reference to FIG. 5. In FIG. 5, fgODUflex whose rate is p*10.409 Mbit/s is mapped to an SDU frame at a mapping granularity of 16 bytes, and the SDU frame is then mapped to an xGEM frame. Specifically, an fgODUflex signal is mapped to an SDU frame of a fixed size through a GMP. The SDU frame includes a JCOH and an SDU payload area. That is, the size of the SDU frame is equal to a sum of a size of the JCOH (which is eight bytes reserved in FIG. 5) and a size of the SDU payload area (which is (m-1)*16 bytes), in other words, the size of the SDU frame is equal to (m-1)*16 bytes plus the size of the JCOH. Because the value of m is related to the fgODUflex rate, the size of the SDU frame is related to the fgODUflex rate. As shown in FIG. 5, the size of the SDU frame is equal to a size of the payload area of the xGEM frame. In other words, in this process, the fgODUflex signal is mapped to the (m-1)*16-byte payload area of the SDU frame through the GMP, and mapping information is placed in the reserved JCOH of the SDU frame. Then, the SDU frame is mapped to the payload area of the xGEM frame, so that one payload area of an xGEM frame carries one SDU frame. That is, the size and a rate of the SDU frame are related to the rate of the fgODUflex signal. For example, an xGEM frame payload rate in Table 1 is a payload rate of the SDU. It can be learned that different fgODUflex rate levels correspond to different SDU payload rates. It should be noted that a mapping manner of mapping the OTN frame to the first transmission frame or mapping the OTN frame to the intermediate frame is not limited in the solutions of this application, for example, may be the GMP shown in FIG. 5.

It should be further noted that a quantity of bits or a quantity of bytes occupied by the JCOH is not limited in this application. In other words, in the mapping procedure shown in FIG. 5, an example in which the JCOH occupies eight bytes is used for description. However, this application is not limited thereto. Header fields of the JCOH and the xGEM frame may be combined to occupy one 16-byte.

Optionally, in the solutions of this application, the overhead generated in the process of mapping the OTN frame to the first transmission frame or the intermediate frame includes a Cₘ value, and the Cₘ value may represent a data amount (a quantity of one or more bytes, or a quantity of bits) of the OTN frame carried in the current first transmission frame or the current intermediate frame, that is, a quantity of bytes included in the OTN frame; or the Cₘ value may represent a data amount of the OTN frame carried in a next first transmission frame or a next intermediate frame. It may be understood that the Cₘ value is carried in the JCOH.

For example, an overhead generated when an fgODUflex signal is mapped to an xGEM frame or an SDU frame includes a Cₘ value, and the Cₘ value represents a data amount of the fgODUflex signal carried in the current xGEM frame or the current SDU frame, that is, a quantity of bytes (a quantity of one or more bytes, or a quantity of bits) of the fgODUflex signal; or the Cₘ value may represent a data amount of the fgODUflex signal carried in a next xGEM frame or a next SDU frame, and the Cₘ value is placed in the JCOH.

Optionally, in addition to the Cₘ value, the JCOH overhead may further include a frame sequence indicator (sequence indicator, SQ), a valid data amount Cₘ₋₁ value, and a valid data amount Cₘ₋₂ value. The Cₘ₋₁ value and the Cₘ₋₂ value are related to a meaning of the Cₘ value. Specifically, when the Cₘ value represents the data amount of the OTN frame carried in the current first transmission frame or the current intermediate frame, the Cₘ₋₁ value and the Cₘ₋₂ value represent data amounts carried in previous two first transmission frames of the current first transmission frame, or previous two intermediate frames of the current intermediate frame. Cₘ₋₁ represents a data amount carried in a first transmission frame that is in the previous two first transmission frames and adjacent to the current first transmission frame. That is, when the current first transmission frame is used as a reference for countdown, the current first transmission frame is the last one, Cₘ₋₁ represents a data amount carried in the previous first transmission frame of the current first transmission frame, that is, a data amount carried in a penultimate first transmission frame, and Cₘ₋₂ represents a data amount carried in a previous second first transmission frame of the current first transmission frame, that is, a data amount of an antepenultimate first transmission frame; or for the intermediate frame, Cₘ₋₁ represents a data amount carried in a penultimate intermediate frame, and Cₘ₋₂ represents a data amount carried in an antepenultimate intermediate frame. When the Cₘ value represents the data amount of the OTN frame carried in the next first transmission frame or the next intermediate frame, the Cₘ₋₁ value and the Cₘ₋₂ value represent data amounts carried in previous two first transmission frames of the next first transmission frame, or previous two intermediate frames of the next intermediate frame. Cₘ₋₁ represents a data amount carried in the current first transmission frame, and Cₘ₋₂ represents a data amount carried in a previous first transmission frame of the current first transmission frame; or for the intermediate frame, Cₘ₋₁ represents a data amount carried in a current intermediate frame, and Cₘ₋₂ represents a data amount carried in a previous intermediate frame of the current intermediate frame.

It may be understood that the receiving node may identify, based on the SQ, whether the carried OTN frame is partially lost, identify, based on the SQ, whether the intermediate frame that carries the OTN frame is lost, or identify, based on the SQ, whether the first transmission frame is lost. When the OTN frame is partially lost or the intermediate frame is lost, a data amount of the OTN frame carried in a lost intermediate frame or first transmission frame may be recovered based on the valid data amounts Cₘ₋₁ and Cₘ₋₂ carried in the previous two frames carried in the JCOH, thereby improving transmission reliability of the service data. For example, when the OTN frame is fgODUflex, the receiving node may identify, based on the SQ, whether the carried fgODUflex is partially lost, identify, based on the SQ, whether an SDU frame that carries the fgODUflex is lost, or identity, based on the SQ, whether a first transmission frame that carries the fgODUflex is lost. When the fgODUflex is partially lost, the SDU frame is lost, or the first transmission frame is lost, a corresponding data amount of the fgODUflex may be recovered, through integer extraction, based on valid data amounts Cₘ of previous two frames that are carried in a JCOH, thereby improving transmission reliability of the fgODUflex.

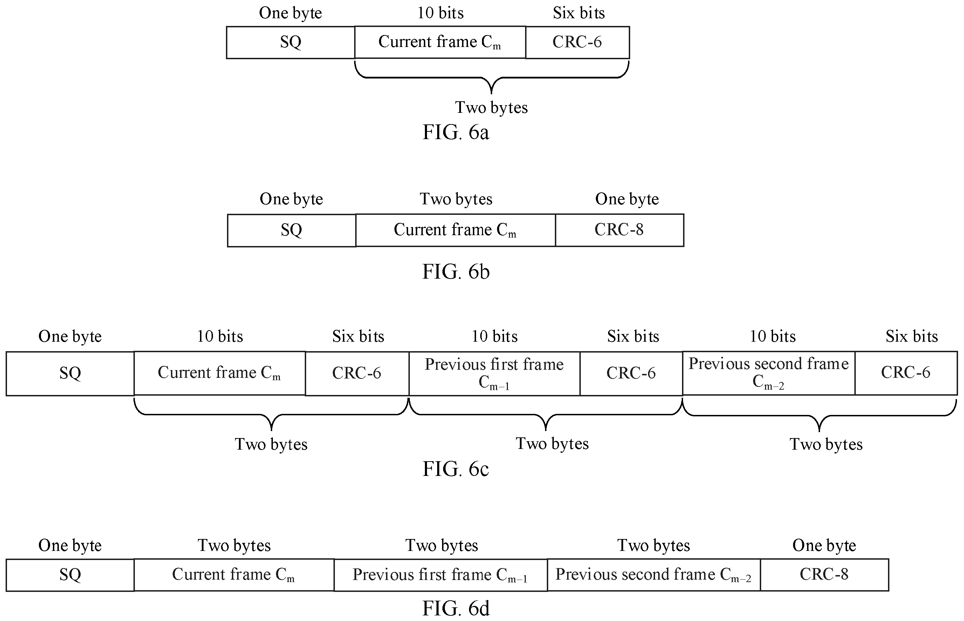

For example, FIG. 6(a) to FIG. 6(d) are diagrams of structures of four different types of JCOHs applicable to an embodiment of this application. Specifically, in a first type of JCOH shown in FIG. 6(a), the JCOH is of a 3-byte structure, and includes an SQ and a Cₘ value in a current first transmission frame or a current intermediate frame. There is one byte that carries the SQ, there are 10 bits that carry the Cₘ value in the current first transmission frame or the current intermediate frame, and remaining six bits are used to carry a cyclic redundancy check (cyclic redundancy check, CRC) code (that is, CRC-6 in FIG. 6(a)). In a second type of JCOH shown in FIG. 6(b), the JCOH is of a 3-byte structure, and includes an SQ and a Cₘ value in a current first transmission frame or a current intermediate frame. There is one byte that carries the SQ, there are two bytes that carry the Cₘ value in the current first transmission frame or the current intermediate frame, and remaining one byte is used to carry a CRC code (that is, CRC-8 in FIG. 6(b)). In a third type of JCOH shown in FIG. 6(c), the JCOH is of a 7-byte structure, and includes an SQ, a Cₘ value in a current first transmission frame or a current intermediate frame, and Cₘ values (including a Cₘ₋₁ value and a Cₘ₋₂ value) in previous two frames of the current first transmission frame or the current intermediate frame. There is one byte that carries the SQ, and there are 10 bits that carry the Cₘ value in the current first transmission frame or the current intermediate frame, where the 10 bits are checked by using an adjacent 6-bit CRC code (that is, CRC-6 adjacent to the Cₘ value in FIG. 6(c)), and the Cₘ value and the CRC code jointly occupy two bytes. There are 10 bits that carry the Cₘ₋₁ value, which are checked by using an adjacent 6-bit CRC code (that is, CRC-6 adjacent to the Cₘ₋₁ value in FIG. 6(c)), and the Cₘ₋₁ value and the CRC code jointly occupy two bytes. There are 10 bits that carry the Cₘ₋₂ value, which are checked by using an adjacent 6-bit CRC code (that is, CRC-6 adjacent to the Cₘ₋₂ value in FIG. 6(c)), and the Cₘ₋₂ value and the CRC code jointly occupy remaining two bytes. In a fourth type of JCOH shown in FIG. 6(d), the JCOH is of an 8-byte structure, and includes an SQ, a Cₘ value in a current first transmission frame or a current intermediate frame, Cₘ values (including a Cₘ₋₁ value and a Cₘ₋₂ value) in previous two frames of the current first transmission frame or the current intermediate frame. There is one byte that carries the SQ, there are two bytes that carry the Cₘ value in the current first transmission frame or the current intermediate frame, there are two bytes that carry the Cₘ₋₁ value, and similarly, there are two bytes that carry the Cₘ₋₂ value, where the Cₘ value, the Cₘ₋₁ value, and the Cₘ₋₂ value are checked by using a 1-byte CRC code (that is, CRC-8 in FIG. 6(d)).

It should be noted that, in FIG. 6(a) to FIG. 6(d), the JCOH is shown by using an example in which the Cₘ value represents the current frame (the current first transmission frame or the current intermediate frame). For meanings of the Cₘ₋₁ value and the Cₘ₋₂ value, refer to the foregoing descriptions in which the Cₘ value is the data amount of the OTN frame carried in the current frame. Details are not described herein again. It may be understood that, when the Cₘ value carried in the JCOH represents a data amount of an OTN frame carried in a next frame following the current frame, Cₘ in the current frame in FIG. 6(a) to FIG. 6(d) is to be replaced with the Cₘ value in the next frame, Cₘ₋₁ in a frame preceding the current frame by one frame is to be replaced with Cₘ₋₁ in the current frame, and Cₘ₋₂ in a frame preceding the current frame by two frames is to be replaced with Cₘ₋₂ in the frame preceding the current frame by one frame.

It should be noted that the Cₘ value in the JCOH overhead may also be represented by C_{mT}, where Cₘ=C_{mBase}+C_{mT}, C_{mBase} is a base value, OTN frames at different rates correspond to different C_{mBase} values, and only the C_{mT} value is carried in the JCOH. For example, for fgODUflex at different rates, C_{mBase} values are described as follows:
(1) For fgODUflex(1) mapped to xGEM, a C_{mBase} value of the fgODUflex(1) may be set to 1.
(2) For fgODUflex(2) mapped to xGEM, a C_{mBase} value of the fgODUflex(2) may be set to 2.
(3) For fgODUflex(3) mapped to xGEM, a C_{mBase} value of the fgODUflex(3) may be set to 3.
(4) For fgODUflex(5) mapped to xGEM, a C_{mBase} value of the fgODUflex(5) may be set to 6.

For example, Table 3 shows correspondences between fgODUflex frames at different rates and xGEM frames at different rates, and values of overheads Cₘ generated in a mapping process of the fgODUflex frames at different rates, when mapping is performed at a mapping granularity of 16 bytes according to this embodiment of this application. C₁₂₈, ₙₒₘ represents a normal data amount, where 128 represents a unit size, that is, 128 bits (that is, 16 bytes). C₁₂₈, ₘₐₓ represents a maximum data amount, and C₁₂₈, ₘᵢₙ represents a minimum data amount.

**Table 3**

| | fgODUflex rate (Mbit/s) | xGEM rate (Mbit/s) | C_{128, nom} | C_{128, min} | C_{128, max} |
|---|---|---|---|---|---|
| fgODUflex(1) | 10.4092031 | 24.576 | 1.270654675 | 1 | 2 |
| fgODUflex(2) | 20.8184062 | 32.768 | 2.541309351 | 2 | 3 |
| fgODUflex(3) | 31.2276093 | 40.96 | 3.811964026 | 3 | 4 |
| fgODUflex(5) | 52.0460155 | 65.536 | 6.353273376 | 6 | 7 |
| fgODUflex(10) | 104.092031 | 114.688 | 12.70654675 | 12 | 13 |
| fgODUflex(20) | 208.184062 | 221.184 | 25.41309351 | 25 | 26 |
| fgODUflex(30) | 312.276093 | 327.68 | 38.11964026 | 38 | 39 |
| fgODUflex(40) | 416.368124 | 425.984 | 50.82618701 | 50 | 51 |
| fgODUflex(50) | 520.460155 | 532.48 | 63.53273376 | 63 | 64 |
| fgODUflex(100) | 1040.92031 | 1056.768 | 127.0654675 | 127 | 128 |
| fgODUflex(119) | 1238.695169 | 1253.376 | 151.2079064 | 151 | 152 |

The foregoing describes in detail the mapping of the OTN frame to the first transmission frame. It should be noted that, after completing the mapping of the OTN frame to the first transmission frame, the sending node sends the first transmission frame. That the sending node sends the first transmission frame may be understood as that the sending node sends the first transmission frame to a module inside the sending node (the first transmission frame may be further mapped to the second transmission frame, or processing such as modulation and photoelectric conversion may be performed on the first transmission frame, which is not limited); or may be understood as that the sending node directly sends the first transmission frame to an external device of the sending node, that is, converts the first transmission frame into an optical signal (which may include conversion performed after the first transmission frame is mapped to the second transmission frame), and sends the optical signal to the peer node. Specifically, the sending node sends the first transmission frame to an optical module, performs photoelectric conversion, and then generates the second transmission frame to be sent to the receiving node. The first transmission frame is mapped to the second transmission frame. For example, in a GPON system, if the first transmission frame is a GEM frame, after mapping of service data is completed, the GEM frame is sent to a gigabit-capable passive optical network transmission convergence (GPON Transmission Convergence, GTC) layer, that is, a GEM adaptation module in a GTC adaptation sublayer, and the GTC layer generates a GTC frame (which may also be referred to as an XGTC frame, and is not limited in this application).

Therefore, the method 400 further includes the following steps:
S403: The sending node maps the first transmission frame to the second transmission frame.

S404. The sending node cyclically sends the second transmission frame to the receiving node within the sending duration, where the sending cycle of the second transmission frame includes n slots, a quantity of bytes occupied by each of the n slots is X, the first transmission frame is carried in m consecutive slots of the n slots, and n is an integer greater than 1.

S405: The receiving node demaps the first transmission frame from the second transmission frame, and demaps the service data from the OTN frame that is demapped from the first transmission frame.

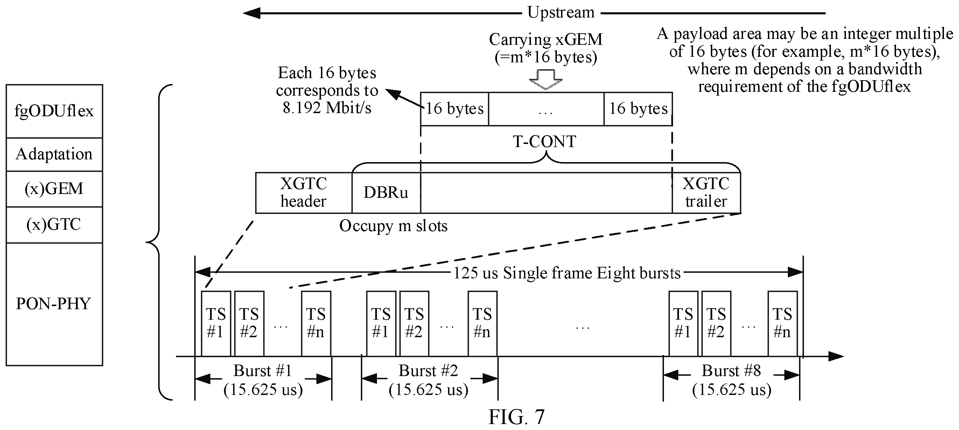

It should be noted that a quantity of second transmission frames sent in each cycle is not limited in this application, and there may be one or more second transmission frames. It may be understood that when a plurality of second transmission frames are sent in one sending cycle, each second transmission frame occupies m slots of the n slots. For example, FIG. 7 is a diagram of a method for processing a service signal in an upstream direction in a PON system according to an embodiment of this application. It may be understood that, during transmission in the upstream direction, fgODUflex is transmitted from an ONU device to an OTN device. Specifically, after the fgODUflex is mapped to an xGEM frame at a mapping granularity of 16 bytes, a structure of the xGEM frame is m*16 bytes. Then, the xGEM is mapped to a payload area of the xGTC frame to generate the xGTC frame. A header (Header) field of the xGTC frame is consistent with an existing xGTC header field. Details are not described herein in this embodiment of this application. As shown in FIG. 7, a sending cycle (also referred to as a burst interval or a transmission cycle of a communication network) of an upstream xGTC frame is 15.625 µs, and the sending cycle is obtained by dividing 125 µs into eight sending cycles. Each sending cycle includes n slots, and one xGTC frame generated by mapping each xGEM frame with m*16 bytes is sent on a fixed slot resource (that is, m consecutive slots) allocated in one sending cycle. If each slot corresponds to 16 bytes, a corresponding rate is 8.192 Mbit/s. When a plurality of xGTC frames are sent in each sending cycle, and the plurality of xGTC frames are generated by mapping a plurality of GEM frames, the plurality of GEM frames share a same sending cycle 15.625 µs, that is, the n slots in each 15.625 µs are occupied by the plurality of GEM frames.

It may be understood that, when the sending node cyclically sends the second transmission frame within the sending duration, where for the receiving node, the sending duration corresponds to a receiving duration of the receiving node, and the sending cycle is a reception cycle of the receiving node, the receiving node may demap the first transmission frame from the second transmission frame, and demap the OTN frame from the first transmission frame, to obtain the service data in the OTN frame. It may be further understood that an implementation in which the receiving node demaps the OTN frame from the first transmission frame may correspond to the foregoing two implementations in which the OTN frame is mapped to the first transmission frame, to be specific, the receiving node directly demaps the OTN frame from the first transmission frame, or the receiving node first demaps an intermediate frame from the first transmission frame, and then demaps the OTN frame from the intermediate frame.

It should be noted that, when the solutions of this application are applied to a PON system, compared with a burst interval of 125 µs in a current PON system, in the solutions provided in this application, an upstream burst interval (namely, the sending cycle) is shortened, thereby reducing latency and jitter of the PON system.

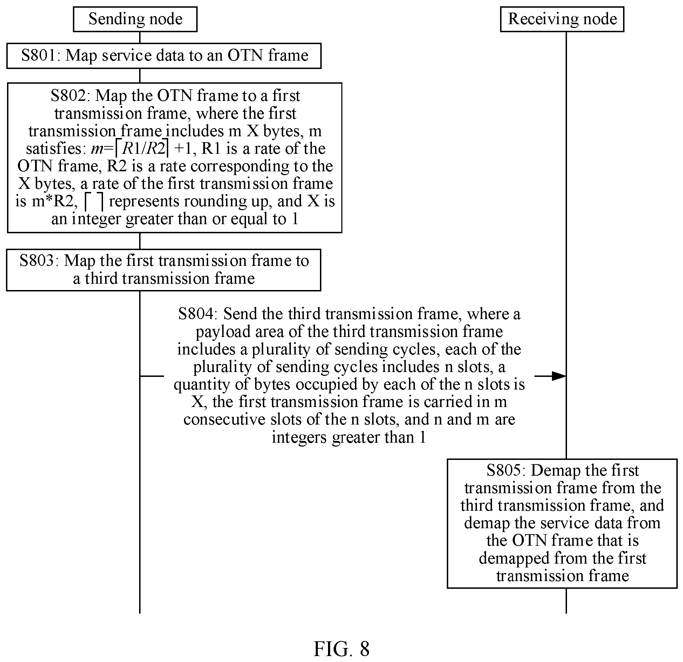

FIG. 8 is a schematic flowchart of another method for processing a service signal according to an embodiment of this application. A sending node may be a central office node, or an internal component (for example, a chip or a chip system) in the central office node, and represents a convergence node in a P2MP system, for example, an OLT device in a PON system. A receiving node may be a terminal node, or an internal component (for example, a chip or a chip system) in the terminal node, and represents a branch node in the P2MP system, for example, an ONU device in the PON system, or an internal component in the ONU device. The sending node may be referred to as a transmitting node, a transmitter device, a sending device, or the like. Similarly, the receiving node may be referred to as a receiving node, a receiver device, a receiving device, or the like. This is not limited in this application.

It should be noted that the method shown in FIG. 8 may be understood as data transmission in a downstream direction, which, for example, means that the OLT device sends service data to the ONU device when the sending node is the OLT device, and the receiving node is the ONU device.

Specifically, the method includes the following plurality of steps.

S801: The sending node maps the service data to an OTN frame.

S802: The sending node maps the OTN frame to a first transmission frame, where the first transmission frame includes m X bytes, and m satisfies: $m = \left⌈R1/R2\right⌉ + 1$, where R1 is a rate of the OTN frame, R2 is a rate corresponding to the X bytes, a rate of the first transmission frame is m*R2, ┌ ┐ represents rounding up, and X is an integer greater than 1.

Specifically, for S801 and S802, refer to the related descriptions of the first transmission frame and the mapping of the service data in FIG. 4. Details are not described herein again.

S803: The sending node maps the first transmission frame to a third transmission frame.

After mapping the OTN frame to the first transmission frame, and sending the first transmission frame to an optical module, the sending node maps a plurality of first transmission frames to the third transmission frame.

S804: The sending node sends the third transmission frame to the receiving node, where a payload area of the third transmission frame includes a plurality of sending cycles, each of the plurality of sending cycles includes n slots, a quantity of bytes occupied by each of the n slots is X, the first transmission frame is carried in m consecutive slots of the n slots, and n and m are integers greater than 1.

S805: The receiving node demaps the first transmission frame from the third transmission frame, and demaps the service data from the OTN frame that is demapped from the first transmission frame.

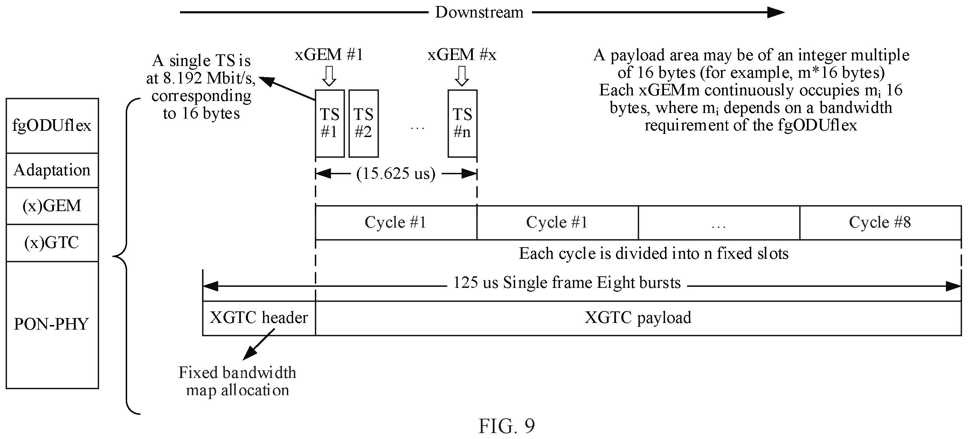

It should be noted that a quantity of first transmission frames sent in each cycle is not limited in this application, and there may be one or more first transmission frames. Because a structure of the first transmission frame is m*X bytes, when a quantity of bytes included in each slot is X, slots carried in each first transmission frame are m consecutive slots. For example, FIG. 9 is a diagram of a method for processing a service signal in a downstream direction in a PON system according to an embodiment of this application. It may be understood that, during transmission in the downstream direction, fgODUflex is transmitted from an OLT device to an ONU device. Specifically, after the fgODUflex is mapped to an xGEM frame at a mapping granularity of 16 bytes, a structure of the xGEM frame is m*16 bytes. Then, a plurality of xGEM frames are mapped to a payload area of an xGTC frame to generate the xGTC frame. As shown in FIG. 9, a burst interval of a downstream xGTC frame is 125 µs, each burst interval includes eight fixed sending cycles, and each sending cycle includes n slots, and corresponds to 15.625 µs. Each xGEM frame with m*16 bytes is mapped to m consecutive slots of the n slots, that is, correspondingly carries one fgODUflex signal. If each slot corresponds to 16 bytes, a corresponding rate is 8.192 Mbit/s. When a plurality of xGEM frames are carried in each sending cycle, the plurality of GEM frames are sent in a same sending cycle. In other words, n slots in each 15.625 µs are occupied by the plurality of GEM frames.

It may be understood that, when the sending node sends the third transmission frame within a sending duration, where for the receiving node, the sending duration corresponds to a receiving duration of the receiving node, and the sending cycle is a reception cycle of the receiving node, the receiving node may demap the first transmission frame from the third transmission frame, and demap the OTN frame from the first transmission frame, to obtain the service data in the OTN frame. It may be further understood that an implementation in which the receiving node demaps the OTN frame from the first transmission frame may correspond to the foregoing two implementations in which the OTN frame is mapped to the first transmission frame, to be specific, the receiving node directly demaps the OTN frame from the first transmission frame, or the receiving node first demaps an intermediate frame from the first transmission frame, and then demaps the OTN frame from the intermediate frame.

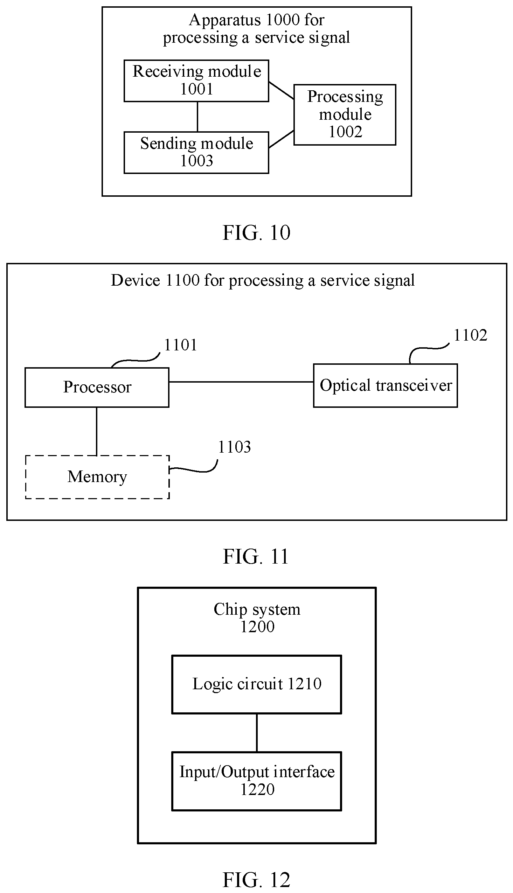

FIG. 10 is a block diagram of an apparatus 1000 for processing a service signal according to an embodiment of this application. The apparatus 1000 for processing a service signal includes a receiving module 1001, and the receiving module 1001 may be configured to implement a corresponding receiving function. The receiving module 1001 may also be referred to as a receiving unit.

The apparatus 1000 for processing a service signal further includes a processing module 1002, and the processing module 1002 may be configured to implement a corresponding processing function.

The apparatus 1000 for processing a service signal further includes a sending module 1003. The sending module 1003 may be configured to implement a corresponding sending function, and the sending module 1003 may also be referred to as a sending unit.

Optionally, the apparatus 1000 for processing a service signal further includes a storage unit. The storage unit may be configured to store instructions and/or data. The processing module 1002 may read the instructions and/or the data in the storage unit, to cause the apparatus to implement an action of the related node in the foregoing method embodiments.

When the apparatus 1000 for processing a service signal may be configured to perform an action performed by the sending node or the receiving node in the foregoing method embodiments, the apparatus 1000 for processing a service signal may be a component in the sending node or the receiving node. The receiving module 1001 is configured to perform a receiving-related operation of the sending node or the receiving node in the foregoing method embodiments, the processing module 1002 is configured to perform a processing-related operation of the sending node or the receiving node in the foregoing method embodiments, and the sending module 1003 is configured to perform a sending-related operation of the sending node or the receiving node in the foregoing method embodiments.

In a design, the apparatus 1000 for processing a service signal is configured to perform an action performed by any node in the foregoing method embodiments. In an embodiment, the apparatus 1000 for processing a service signal may be configured to perform an operation of the sending node in FIG. 4 or FIG. 8.

For example, the processing module 1002 is configured to: map service data to an OTN frame, and map the OTN frame to a first transmission frame. The first transmission frame includes m X bytes, and m satisfies: $m = \left⌈R1/R2\right⌉ + 1$. R1 is a rate of the OTN frame, R2 is a rate corresponding to the X bytes, a rate of the first transmission frame is m*R2, and ┌ ┐ represents rounding up.

The sending module 1003 is configured to send the first transmission frame.

It should be understood that a specific process in which the modules perform the foregoing corresponding steps has been described in detail in the foregoing method embodiments. For brevity, details are not described herein again.

In addition, the receiving module 1001, the processing module 1002, and the sending module 1003 in the apparatus 1000 for processing a service signal may further implement another operation or function of the receiving node in the foregoing methods. Details are not described herein again.

In another embodiment, the apparatus may be configured to perform an operation of the receiving node in FIG. 4 or FIG. 8.

For example, the receiving module 1001 is configured to receive a first transmission frame, where the first transmission frame includes m X bytes, and m satisfies: $m = \left⌈R1/R2\right⌉ + 1$. R1 is a rate of an OTN frame, R2 is a rate corresponding to the X bytes, a rate of the first transmission frame is m*R2, and ┌ ┐ represents rounding up.

The processing module 1002 is configured to: demap the OTN frame from the first transmission frame, and demap service data from the OTN frame.

It should be understood that a specific process in which the modules perform the foregoing corresponding steps has been described in detail in the foregoing method embodiments. For brevity, details are not described herein again.

An apparatus for processing a service signal provided in an embodiment of this application is described in detail below with reference to FIG. 11. It should be understood that descriptions of apparatus embodiments correspond to the descriptions of the method embodiments. Therefore, for content that is not described in detail, refer to the foregoing method embodiments. For brevity, some content is not described again.

FIG. 11 is a diagram of a possible structure of a device for processing a service signal according to an embodiment of this application. The communication device is a sending node or a receiving node. As shown in FIG. 11, the communication device 1100 includes a processor 1101, an optical transceiver 1102, and a memory 1103. The memory 1103 is optional. The communication device 1100 may be used in a transmitter device (for example, the sending node), and may also be used in a receiver device (for example, the receiving node).

When the communication device is used in the transmitter device, the processor 1101 and the optical transceiver 1102 are configured to implement the method performed by the sending node shown in FIG. 4 or FIG. 8. In an implementation process, steps in a processing procedure may be performed by using an integrated logic circuit of hardware in the processor 1101 or instructions in a form of software, to complete the method performed by the sending node in the foregoing accompanying drawings. The optical transceiver 1102 is configured to receive and process a to-be-sent data frame, and send the data frame to the peer node (also referred to as the receiving node).

When the communication device is used in the receiver device, the processor 1101 and the optical transceiver 1102 are configured to implement the method performed by the receiving node shown in FIG. 4 or FIG. 8. In an implementation process, steps in a processing procedure may be performed by using an integrated logic circuit of hardware in the processor 1101 or instructions in a form of software, to complete the method performed by the receiving node in the foregoing accompanying drawings. The optical transceiver 1102 is configured to receive a data frame sent by a peer device (also referred to as the sending node), to send the data frame to the processor 1101 for subsequent processing.

The memory 1103 may be configured to store instructions, so that the processor 1101 may be configured to perform the steps mentioned in the foregoing figures. Alternatively, the memory 1103 may be configured to store another instruction, to configure a parameter of the processor 1101 to implement a corresponding function.

It should be noted that, in the diagram of the hardware structure of the network device shown in FIG. 3, the processor 1101 and the memory 1103 may be located in a tributary board, or may be located in a tributary-line integrated board. Alternatively, there are a plurality of processors 1101 and a plurality of memories 1103, which are respectively located on a tributary board and a line board, and the two boards cooperate to complete the foregoing method steps.

It should be noted that the apparatus in FIG. 11 may also be configured to perform the method steps related to variations of embodiments shown in the foregoing accompanying drawings. Details are not described herein again.

FIG. 12 is a diagram of a chip system 1200 according to an embodiment of this application. The chip system 1200 (or may be referred to as a processing system) includes a logic circuit 1210 and an input/output interface (input/output interface) 1220.

The logic circuit 1210 may be a processing circuit in the chip system 1200. The logic circuit 1210 may be coupled and connected to a storage unit, and invoke instructions in the storage unit, so that the chip system 1200 can implement the methods and the functions in embodiments of this application. The input/output interface 1220 may be an input/output circuit in the chip system 1200, and outputs information processed by the chip system 1200, or inputs to-be-processed data or signaling information to the chip system 1200 for processing.

Optionally, the logic circuit 1210 may be implemented by one or more processors, including the one or more processors or a processing part of the one or more processors.

Optionally, the input/output interface 1220 may include a transceiver circuit, a transceiver, an input/output circuit, or a communication interface.

In a solution, the chip system 1200 is configured to implement an operation performed by the sending node or the receiving node in the foregoing method embodiments.

Specifically, the logic circuit 1210 is configured to implement a processing-related operation performed by the sending node or the receiving node in the foregoing method embodiments. The input/output interface 1220 is configured to implement a sending-related and/or receiving-related operation performed by the sending node or the receiving node in the foregoing method embodiments.

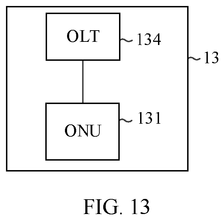

FIG. 13 is a diagram of a structure of a system 13 according to this application. The system includes an OLT 134 and an ONU 131. When the system performs upstream transmission, the ONU 131 may perform any step performed by the sending node in FIG. 4 in the foregoing embodiment. The OLT 134 may perform any step performed by the receiving node in FIG. 4 in the foregoing embodiment. Alternatively, when the system performs downstream transmission, the OLT 134 may perform any step performed by the sending node in FIG. 8 in the foregoing embodiment. The ONU 131 may perform any step performed by the receiving node in FIG. 8 in the foregoing embodiment. Details are not described herein in this embodiment of this application.

An embodiment of this application further provides a computer-readable storage medium. The computer-readable storage medium stores computer instructions used to implement the method performed by the first device or the ONU device in the foregoing method embodiments.

For example, when the computer program is executed by a computer, the computer is caused to implement the method performed by the first device or the ONU device in the foregoing method embodiments.

Based on the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, such as a USB flash drive, a removable hard disk, a read-only memory, a random access memory, a magnetic disk, or an optical disc.

It is clear that a person skilled in the art may make various modifications and variations to embodiments of this application without departing from the scope of embodiments of this application. In this way, if these modifications and variations to embodiments of this application fall within the scope of the claims of this application and their equivalent technologies, this application is also intended to cover these modifications and variations.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application; but it should not be considered that the implementation goes beyond the protection scope of this application.

In several embodiments provided in this application, it should be understood that the disclosed apparatuses and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending data in a communication network, wherein the method comprises:
mapping a first data frame to a first transmission frame, wherein a length of the first transmission frame is related to a rate of the first data frame, and the rate of the first data frame ranges from 10 Mbit/s to 1250 Mbit/s; and
sending the first transmission frame.

2. The method according to claim 1, wherein the length of the first transmission frame is further related to a transmission cycle of the communication network.

3. The method according to claim 2, wherein the transmission cycle of the communication network is 15.625 µs.

4. The method according to any one of claims 1 to 3, wherein the first data frame has p rate levels, and when the rate level is greater than 1, a higher rate of the first data frame indicates a longer length of the first transmission frame.

5. The method according to any one of claims 1 to 4, wherein the length of the first transmission frame comprises q 16-byte, and $q = ceiling \left(\frac{{R}_{fgODU \left(p\right)}}{8.192}\right) + 1$, or $q = ceiling \left(\frac{{R}_{fgODU \left(p\right)} \pm 20 ppm}{8.192}\right) + 1$, wherein ceiling represents rounding up, and *R*_{*fgODU*(*p*)} represents the rate of the first data frame.

6. The method according to any one of claims 1 to 5, wherein the mapping the first data frame to the first transmission frame comprises:
mapping the first data frame to an intermediate frame, wherein a length of the intermediate frame is related to the rate of the first data frame; and
mapping the intermediate frame to the first transmission frame.

7. The method according to any one of claims 1 to 6, wherein the first data frame is a fine-grain flexible optical data unit fgODUflex frame, and the first transmission frame is a passive optical network PON frame.

8. A method for receiving data in a communication network, wherein the method comprises:
receiving a first transmission frame; and
demapping a first data frame from the first transmission frame, wherein a length of the first transmission frame is related to a rate of the first data frame, and the rate of the first data frame ranges from 10 Mbit/s to 1250 Mbit/s.

9. The method according to claim 8, wherein the length of the first transmission frame is further related to a transmission cycle of the communication network.

10. The method according to claim 9, wherein the transmission cycle of the communication network is 15.625 µs.

11. The method according to any one of claims 8 to 10, wherein the first data frame has p rate levels, and when the rate level is greater than 1, a higher rate of the first data frame indicates a longer length of the first transmission frame.

12. The method according to any one of claims 8 to 11, wherein the length of the first transmission frame comprises q 16-byte, and $q = ceiling \left(\frac{{R}_{fgODU \left(p\right)}}{8.192}\right) + 1$, or $q = ceiling \left(\frac{{R}_{fgODU \left(p\right)} \pm 20 ppm}{8.192}\right) + 1$, wherein *ceiling* represents rounding up, and *R*_{*fgODU*(*p*)} represents the rate of the first data frame.

13. The method according to any one of claims 8 to 12, wherein the demapping the first data frame from the first transmission frame comprises:
demapping an intermediate frame from the first transmission frame, wherein a length of the intermediate frame is related to the rate of the first data frame; and
demapping the first data frame from the intermediate frame.

14. The method according to any one of claims 8 to 13, wherein the first data frame is a fine-grain flexible optical data unit fgODUflex frame, and the first transmission frame is a passive optical network PON frame.

15. A network device, comprising: a processor and an input/output interface, configured to perform the method according to any one of claims 1 to 7, or perform the method according to any one of claims 8 to 14.

16. An optical module, comprising a signal processor and an optical transmitter component, wherein
the signal processor is configured to perform the method according to any one of claims 1 to 7; and
the optical transmitter component is configured to: convert the first transmission frame into an optical signal, and send the optical signal.

17. An optical module, comprising a signal processor and an optical transmitter component, wherein
the optical receiver component is configured to: receive an optical signal, and convert the optical signal into the first transmission frame; and
the signal processor is configured to perform the method according to any one of claims 8 to 14.

18. A chip, comprising: a processor and a communication interface, configured to perform the method according to any one of claims 1 to 7, or perform the method according to any one of claims 8 to 14.
